Europäisches Patentamt
European Patent Office
Office européen des brevets

(19) (11) Veröffentlichungsnummer: **0 045 395 A1**

(12) **EUROPÄISCHE PATENTANMELDUNG**

(21) Anmeldenummer: 81105339.6

(22) Anmeldetag: 09.07.81

(51) Int. Cl.³: C 08 G 65/44

(30) Priorität: 02.08.80 DE 3029429

(43) Veröffentlichungstag der Anmeldung: 10.02.82 Patentblatt 82/6

(84) Benannte Vertragsstaaten: BE DE FR GB IT NL

(71) Anmelder: BASF Aktiengesellschaft
Carl-Bosch-Strasse 38
D-6700 Ludwigshafen(DE)

(72) Erfinder: Naarmann, Herbert, Dr.
Haardtblick 15
D-6719 Wattenheim(DE)

(72) Erfinder: Brandstetter, Franz, Dr.
Ritterbuechel 45
D-6730 Neustadt(DE)

(72) Erfinder: Schuster, Hans, Dr.
Luitpoldstrasse 166
D-6700 Ludwigshafen(DE)

(54) **Verfahren zur Herstellung von Polyphenylenäthern.**

(57) Verfahren zur Herstellung hochmolekularer Polyphenylenäther aus einwertigen Phenolen, die in den beiden ortho-Stellungen, nicht aber in der para-Stellung Alkylsubstituenten aufweisen, durch oxidative Kupplungsreaktion mit Sauerstoffgas bei Temperaturen zwischen 15 und 22°C in Anwesenheit eines Katalysatorkomplexes aus einem Kupfersalz und einem organischen Amin der allgemeinen Formel:

$$\begin{array}{c} \qquad\qquad\qquad\quad R^1 \\ \qquad\qquad\qquad\quad | \\ R^3-CH_2-CH_2-C-NH_2, \\ \qquad\qquad\qquad\quad | \\ \qquad\qquad\qquad\quad R^2 \end{array}$$

in der $R^1$ und $R^2$ = $CH_3$ oder H und $R^3$ = ein verzweigtes oder geradkettiger aliphatischer, $C_1$- bis $C_{10}$-, bevorzugt $C_3$- bis $C_{10}$-Kohlenwasserstoffrest in Gegenwart eines Lösungsmittels im Bereich von 1:1 bis 20:1 Gewichtsteilen und gegebenenfalls eines Aktivators.

Das Amin kann ein Pentylamin, Hexylamin, Heptylamin, Octylamin, Nonylamin oder deren Mono-, Di- oder Trimethylderivat sein und ist bevorzugt 1,4-Dimethylpentylamin.

EP 0 045 395 A1

Croydon Printing Company Ltd.

# Verfahren zur Herstellung von Polyphenylenäthern

Die Erfindung betrifft ein Verfahren zur Herstellung hochmolekularer Polyphenylenäthern aus einwertigen Phenolen, die in den beiden ortho-Stellungen, nicht aber in der para-Stellung Alkylsubstituenten aufweisen, durch oxidative Kupplungsreaktion mit Sauerstoffgas bei Temperaturen zwischen 25 und 50°C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol und gegebenenfalls eines Aktivators.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Es ist bekannt, zur Erfüllung dieser Erfordernisse in aromatischen Lösungsmitteln wie Benzol oder Toluol die Reaktion in Anwesenheit eines Katalysatorkomplexes aus Kupfer-II-Salzen und einem geradkettigen aliphatischen Amin sowie einem niedermolekularen Alkylalkohol durchzuführen (vgl. US-PS 3 661 848). Nach Beendigung der Reaktion wird die das Polymere enthaltende Aromatenlösung mit etwa der 10-fachen Menge Methanol versetzt, das ausgefällte Polymere abfiltriert, mit Methanol gewaschen und bei 70°C im Vakuum getrocknet.

Dieser bisher ausgeübte Reaktionsweg weist neben dem Nachteil der vergleichsweise geringen Polymerenausbeute auch den Nachteil der Bildung von Nebenprodukten wie Tetramethyldiphenochinon und niedermolekulare Polyphenylenäther auf.

Fre/BL

Der Erfindung lag die Aufgabe zugrunde, durch Abändern der Polymerisationsbedingungen Polymere mit hoher Ausbeute zu erhalten, die ein vergleichbar hohes Molekulargewicht aufweisen und eine einheitliche Molekulargewichtsverteilung zeigen.

Diese Aufgabe wird erfindungsgemäß dadurch gelöst, daß als organisches Amin eine Verbindung der allgemeinen Formel:

$$R^3-CH_2-CH_2-\overset{R^1}{\underset{R^2}{C}}-NH_2,$$

in der $R^1$ und $R^2$ = $CH_3$ oder H und $R^3$ = ein verzweigter oder geradkettiger aliphatischer, $C_1$- bis $C_{10}$-, bevorzugt $C_3$ bis $C_{10}$-Kohlenwasserstoffrest verwendet wird und die Polykondensationstemperatur zwischen 15 und 22°C liegt. Besonders bevorzugte organische Amine sind Pentyl-, Hexyl-, Heptyl-, Octyl-, Nonylamin oder deren Mono-, Di- oder Trimethylderivate. Am besten geeignet ist das 1,4-Dimethylpentylamin.

Unter hochmolekularen Polyphenylenäthern werden die durch oxidative Kupplung von 2,6-Dialkylphenol zu einer Kette alkylsubstituierter, in para-Stellung durch Sauerstoffatome ätherartig gebundene Benzolringe verstanden. Die erfindungsgemäßen Polymeren weisen Molekulargewichte von 23 000 bis 40 000, bevorzugt 25 000 bis 30 000, bestimmt nach "Macromolecular Synthesis" 1 (1978) Seite 83 auf. Hochmolekulare Polyphenylenäther, auch Poly(phenylenoxide) genannt, sind an sich aus der Literatur seit längerem bekannt (vgl. z.B. US-PS 3 661 848; US-PS 3 219 625 oder US-PS 3 378 505), so daß sich hier eine weitere Beschreibung erübrigt.

Die zur Herstellung der hochmolekularen Polyphenylenäther verwendeten einwertigen Phenole, die in den beiden ortho-Stellungen, nicht aber in der para-Stellung Alkylsubstituenten aufweisen, sind die üblichen Phenole wie 2,6-Dimethylphenol, 2,6-Diäthylphenol, 2-Methyl-6-äthylphenyl, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoffgas in die 25 bis 50°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist.

Bei dem für die Polykondensation bekannten Katalysatorkomplex handelt es sich üblicherweise um eine Kombination aus einem Amin, z.B. n-Dibutylamin, Diäthylamin, Picolin, Chinolin, Pyridinbasen, Triisopropylamin, Dimethylisopropanolamin, Triäthanolamin, Triisopropanolamin oder Diisopropanolamin mit einem Kupfersalz wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1, d.h. maximal bis zu einem Über-

schuß des 20-fachen am Lösungsmittel, bezogen auf das Monomere.

Als Lösungsmittel werden Benzol, Toluol und aliphatische Kohlenwasserstoffe, vorzugsweise $C_6$- bis $C_{10}$-Kohlenwasserstoffe, verwendet.

Darüberhinaus kann die Reaktionsmischung einen Aktivator wie ein Diarylguanidin oder ein Diarylformamidin enthalten (vgl. US-PS 3 544 515).

Nach dem erfindungsgemäßen Verfahren soll als Amin eine Verbindung der allgemeinen Formel:

$$R^3-CH_2-CH_2-\overset{R^1}{\underset{R^2}{C}}-NH_2,$$

in der $R^1$ und $R^2$ = $CH_3$ oder H und $R^3$ = ein verzweigter oder geradkettiger aliphatischer $C_1$- bis $C_{10}$-, bevorzugt $C_3$- bis $C_{10}$-Kohlnewasserstoff, verwendet werden. Besonders bevorzugte Amine sind Pentylamin, Hexylamin, Heptylamin, Octylamin, Nonylamin oder deren Mono-, Di- oder Trimethylderivate wie 1-Methylphenylamin, 1-Methyloctylamin, 1,5-Dimethyloctylamin, 1,6-Dimethylnonylamin oder 1,4-Dimethylbutylamin. Am besten geeignet ist das 1,4-Dimethylpentylamin. Ein bevorzugter Bereich bei der Menge des eingesetzten Amins liegt bei 2,0 bis 25 Gewichtsprozent, bezogen auf das Monomere. Als Kupfersalze sind die üblichen geeignet wie Chloride, Bromide, Sulfate, Acetate, Acetylacetonate, Propionate oder Acetylacetate, die Konzentration des Kupfersalzes im Aminkomplex ist die bei der Polykondensation von Phenolen übliche und variiert vorzugsweise von 0,2 bis 2,5 Mol pro 100 Mol des Monomeren.

Beim erfindungsgemäßen Verfahren wird die Polykondensationsreaktion bei Temperaturen zwischen 15 und 22, vorzugsweise 18 und 22°C durchgeführt. Hierzu wird der Sauerstoff in die 15 bis 22°C warme Lösung des Monomeren in Gegenwart des erfindungsgemäßen Aminkomplexes eingeleitet, die Reaktion ist in kurzer Zeit beendet.

Die mit der Erfindung erzielten Vorteile bestehen insbesondere darin, daß die Polymeren in Ausbeuten von größer als 95 Gewichtsprozent, bezogen auf das eingesetzte Monomere, erhalten werden können und daß die Molekulargewichtsverteilung sehr einheitlich ist. Das Molekulargewicht der erhaltenen Polymeren liegt zwischen 23 000 und 40 000, bevorzugt 25 000 bis 30 000, bestimmt nach Makromolecular Synthesis 1 (1978) Seite 83.

Die Erfindung wird durch die nachfolgenden Beispiele näher erläutert.

Beispiel 1

Herstellung von Poly-(2,6-dimethyl-1,4-phenylen)-äther

Zu einer Vorlage von 1,3 g Cu-I-Bromid und 20 g 1,4-Dimethylpentylamin werden 2 g 2,6-Dimethylphenol gegeben und bei 20°C 5 Minuten unter Einleiten von Sauerstoff gerührt, dann wird im Verlauf von 30 Minuten eine Lösung von 204 g 2,6-Dimethylphenol (= DMP) in 1 400 ml Toluol eindosiert, anschließend wird noch 1 Stunde bei 20°C gerührt. Die Reaktion wird in Gegenwart von 30 Liter/Stunde Sauerstoff durchgeführt.

Nach Beendigung der Reaktion wird das Polymerisat in der Reaktionslösung mit Methanol ausgefällt und 2mal mit 100 ml Methanol gewaschen. Das erhaltene Polymerisat hat

nach dem Trocknen eine Intrinsic Viskosität [$\eta$] von 0,8 dl/g. Die Ausbeute an Polymeren lag bei 98 % (bezogen auf eingesetztes Monomeres). Analyse: Cu-Gehalt: 3 ppm, N-Gehalt: 0,09 %.

Beispiel 2

Wird wie im Beispiel 1 beschrieben gearbeitet, jedoch Art und Menge der Katalysatoren variiert, so werden die in der folgenden Tabelle wiedergegebenen Resultate erhalten.

Tabelle

| Beispiel Nr. | Cu-Salz g wasserfrei | | Einsatz von jeweils 206 g DMP Amin Art und Menge in g | | dl/g |
|---|---|---|---|---|---|
| 2 | Cu-I-Br | 1,3 | Octylamin | 33 g | 0,64 |
| 3 | Cu-I-Br | 1,3 | Pentylamin | 33 g | 0,68 |
| 4 | CU-I-Br | 1,3 | Heptylamin | 33 g | 0,73 |
| 5 | Cu-I-Br | 1,3 | 1-Methylpentylamin | 33 g | 0,61 |
| 6 | Cu-I-Br | 1,3 | 1,4-Dimethylpentylamin | 33 g | 0,77 |
| 7 | Cu-I-Cl | 1,3 | 1-Methyloctylamin | 33 g | 0,78 |
| 8 | Cu-I-J | 1,3 | 1,5-Dimethyloctylamin | 33 g | 0,85 |
| 9 | Cu-I-Br | 3,6 | Nonylamin | 33 g | 0,69 |
| 10 | Cu-I-Br | 2,6 | Decylamin | 33 g | 0,66 |
| 11 | Cu-II-Br | 1,3 | 1-Methylpentylamin | 33 g | 0,82 |
| 12 | Cu-II-Br | 1,3 | 1,6-Dimethylnonylamin | 33 g | 0,64 |
| 13 | Cu-II - Acetat | 1,5 | 1,4-Dimethylpentylamin | 33 g | 0,65 |
| 14 | Cu-II - Propionat | 1,5 | 1,4-Dimethylpentylamin | 33 g | 0,65 |
| 15 | Cu-I-Acet-essig-ester | 1,5 | 1,4-Dimethylpentylamin | 33 g | 0,66 |
| 16 | Cu-II - Acetyl-aceton | 1,5 | 1,4-Dimethylbutylamin | 33 g | 0,72 |
| 17 | Cu-I-Br | 1,3 | 1,4-Dimethylpentylamin | 15 g | 0,68 |
| Vergleich entspr. US-PS 36 61 848 Beispiel 1 DMP 58 g | Cu-II-Br | 0,76g | Dibutylamin | 10,9 | 0,46 |

## Patentansprüche

1. Verfahren zur Herstellung hochmolekularer Polyphenylenäther aus einwertigen Phenolen, die in den beiden ortho-Stellungen, nicht aber in der para-Stellung Alkylsubstituenten aufweisen, durch oxidative Kupplungsreaktion mit Sauerstoffgas bei Temperaturen zwischen 25 und 50°C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol, und gegebenenfalls eines Aktivators, dadurch gekennzeichnet, daß als organisches Amin eine Verbindung der allgemeinen Formel:

$$R^3-CH_2-CH_2-\underset{R^2}{\overset{R^1}{C}}-NH_2,$$

in der $R^1$ und $R^2$ = $CH_3$ oder H und $R^3$ = ein verzweigter oder geradkettiger aliphatischer, $C_1$- bis $C_{10}$-, bevorzugt $C_3$- bis $C_{10}$-Kohlenwasserstoffrest, verwendet wird und die Polykondensationstemperatur zwischen 15 und 22°C liegt.

2. Verfahren nach Anspruch 1, dadurch gekennzeichnet, daß das Amin ein Pentylamin, Hexylamin, Heptylamin, Octylamin, Nonylamin oder deren Mono-, Di- oder Trimethylderivat ist.

3. Verfahren nach Anspruch 1, dadurch gekennzeichnet, daß das Amin 1,4-Dimethylpentylamin ist.

0045395

Europäisches Patentamt

# EUROPÄISCHER RECHERCHENBERICHT

Nummer der Anmeldung

EP 81 10 5339.6

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | DE - A1 - 2 460 326 (GENERAL ELECTRIC CO.)<br>* Ansprüche 1, 9 bis 11; Seite 6, Zeilen 1 bis 7 *<br>-- | 1,2 | C 08 G 65/44 |
| X | DE - A1 - 2 913 204 (MITSUBISHI GAS CHEMICAL CO.)<br>* Ansprüche 1, 2 *<br>-- | 1 | |
| | BE - A - 747 321 (GENERAL ELECTRIC CO.)<br>* Ansprüche 1 bis 8, 11 *<br>-- | 1 | RECHERCHIERTE SACHGEBIETE (Int. Cl.³)<br>C 08 G 65/00 |
| | US - A - 3 405 092 (N.V. ONDERZOEKINGS-INSTITUUT RESEARCH)<br>* Beispiele 1 bis 5 *<br>-- | 1 | |
| | GB - A - 1 379 028 (MITSUBISHI GAS CHEMICAL CO., INC.<br>* Seite 2, Zeilen 51 bis 61 *<br>-- | 1 | |
| A | DE - A - 1 570 683 (GENERAL ELECTRIC CO.) | | |
| D | & US - A - 3 306 874<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 15-10-1981 | WIBMER |